# EUROPEAN PATENT SPECIFICATION

(11) **EP 3 871 830 B1**
(45) Date of publication and mention of the grant of the patent: **13.07.2022**
(21) Application number: 21159527.7
(22) Date of filing: 26.02.2021
(51) Int. Cl.: B23Q 1/00

(54) **PNEUMATICALLY-ACTUATED POSITIONING DEVICE WITH A SAFETY SYSTEM FOR MACHINE TOOLS AND MACHINING CENTERS**
PNEUMATISCH BETÄTIGTE POSITIONIERVORRICHTUNG MIT EINEM SICHERHEITSSYSTEM FÜR WERKZEUGMASCHINEN UND BEARBEITUNGSZENTREN
DISPOSITIF DE POSITIONNEMENT À ACTIONNEMENT PNEUMATIQUE COMPORTANT UN SYSTÈME DE SÉCURITÉ POUR MACHINES OUTILS ET CENTRES D'USINAGE

(30) Priority: 27.02.2020 IT 202000004057
(43) Date of publication of application: 01.09.2021
(73) Proprietor: Autoblok S.p.A., 10040 Caprie (TO) (IT)
(72) Inventor: BRONZINO, Pier Mauro, 10040 CAPRIE TO (IT); BRONZINO, Walter, 10055 CONDOVE TO (IT)
(74) Representative: Modiano, Micaela Nadia

(56) References cited:
- EP-A1- 1 598 144
- EP-A1- 2 036 662
- JP-A- S62 255 042
- US-A1- 2016 059 424

## Description

The present invention relates to a pneumatically-actuated positioning device with a safety system for machine tools and machining centers.

As is known, a workpiece to be worked in a machine tool or machining center can be mounted on a workpiece holder, for example, a self-centering device which in turn is fixed to a support, generally known as "pallet". The pallet is mounted on a positioning device which is connected to the machine tool or machining center, for example, to the rotating shaft of a lathe.

The positioning device can be provided with one or more locking inserts which can slide radially with respect to a machining axis. The locking inserts are actuated for closing by preloaded springs in order to engage for retention a corresponding centering pin which is integral with the pallet and are actuated to open by a pneumatic cylinder in order to release the centering pin and therefore release the pallet.

Therefore, the closing force of the locking pins usually is determined by the stiffness of the springs and by the preloading applied thereto.

Nevertheless, for some applications it is known to generate an additional clamping force by actuating the pneumatic cylinder in the closing direction of the locking inserts. This solution is very effective, since it allows to increase the gripping force considerably, for example, from 6-7 kN to 22-24 kN.

In particular, Italian patent application No. IT102018000003257 in the name of this same Applicant discloses a positioning device provided with pneumatic valve means capable of permanently keeping the positioning device in an open configuration and in a closed configuration without requiring a continuous supply of pressurized air but instead connecting only temporarily a source of pressurized air to the pneumatic valve means, either manually or in an automated manner, for example by means of a robot.

This solution makes the positioning device compatible with all those machining processes in which it is problematic to supply pressurized air continuously in said device, for example, chip-forming machining processes in which the workpiece is rotated, as in the case of turning.

However, the step for clamping the positioning device by introducing pressurized air can be susceptible to human error if performed manually (for example, the operator might supply air in the direction for the opening of the locking inserts instead of the one for their closure), or to malfunctions if performed automatically.

As a result, the machining process might begin without the pallet being correctly fixed to the positioning device, with consequent risks for the operators, especially in machining processes in which the workpiece is rotated at high speeds, as in the already mentioned case of turning work.

For safety reasons, it would be therefore desirable for the clamping to be ensured automatically and reliably when the pallet is placed in the positioning device, regardless of the introduction of pressurized air in the circuit.

This improvement, moreover, affects in general all positioning devices which require the introduction of pressurized air for clamping, including those that require a continuous supply. Patent Document EP 2 036 662 A1 discloses a positioning device on which the preamble of appended claim 1 is based.

The aim of the present invention is to provide a pneumatically-actuated positioning device for machine tools and machining centers the clamping of which is automatically and reliably ensured when the pallet is arranged in the positioning device, regardless of the introduction of pressurized air into the circuit.

Within this aim, an object of the invention is to provide a solution that can be implemented easily in already commercially available positioning devices.

This aim and object and others that will become better apparent from the following description are achieved by a positioning device having the characteristics described in claim 1, while the dependent claims define other advantageous characteristics of the invention.

The invention will be now described in greater detail, with reference to some of its preferred but not exclusive embodiments, illustrated by way of non-limiting example in the accompanying drawings, wherein:
- Figure 1 is a perspective view of a positioning device according to the invention in the step for coupling with a pallet on which a self-centering device is installed;
- Figure 2 is an axial sectional view of the positioning device of Figure 1;
- Figure 3 is an enlarged-scale view of a detail of Figure 2;
- Figure 4 is a view of an isolated component of the positioning device according to the invention.

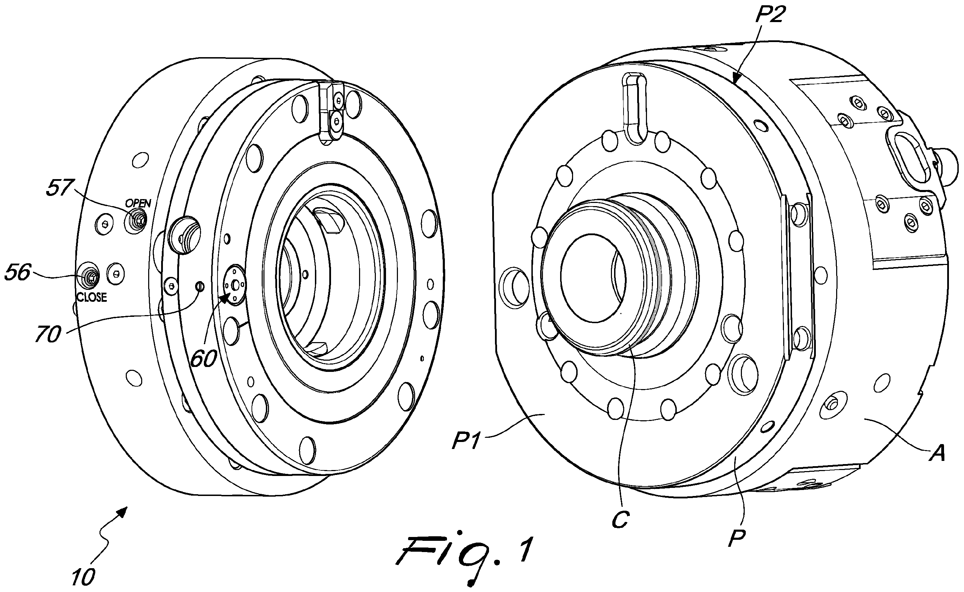

With initial reference to Figure 1, a positioning device 10 for machine tools and machining centers is adapted to retain a per se known pallet P to which a workpiece holder is fixed which, in the example described here, consists of a self-centering device A which is also per se known.

The pallet P comprises a substantially disk-like plate, which has an engagement surface PI adapted to abut against the positioning device 10, and a fixing surface P2 which is opposite to the first one and on which the self-centering device A is fixed.

The pallet P is provided with a centering pin C which is shaped for fixing to the positioning device 10.

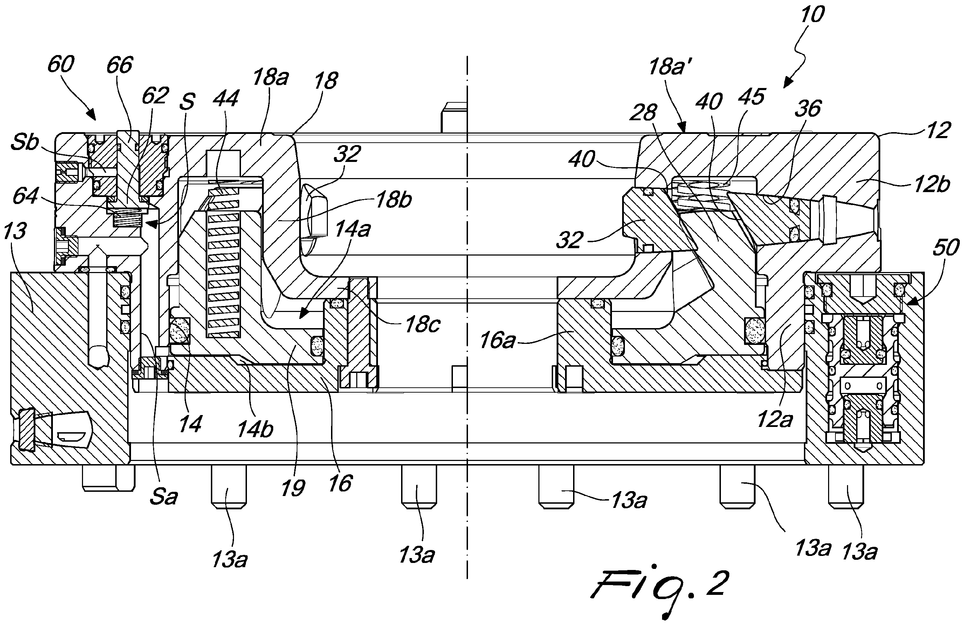

With reference now also to Figure 2, the positioning device 10 comprises a body 12 which has a narrower cylindrical portion 12a and a wider cylindrical portion 12b which are mutually coaxial.

The narrower cylindrical portion 12a is inserted in, and fixed to, an annular flange 13. The annular flange 13 is provided with screws 13a for connection to a machine tool or machining center, for example, to the rotating shaft of a lathe (not shown), typically by means of an interface flange (not shown). The wider cylindrical portion 12b is in axial abutment against the annular flange 13.

A pneumatic chamber 14 with an annular profile is formed in the body 12.

An axial end of the pneumatic chamber 14 is closed by an annular bottom plate 16 which is fixed to the end of the narrower cylindrical portion 12a. A hollow cylindrical tab 16a is extended monolithically and axially from the inside diameter of the annular bottom plate 16 toward the inside of the body 12, so as to form the internal wall of the pneumatic chamber 14.

The opposite axial end of the pneumatic chamber 14 is delimited by a bottom wall 18 obtained monolithically from the body 12. The bottom wall 18 has an outermost annular portion 18a which extends on a plane at right angles to the axis of the pneumatic chamber 14, an intermediate cylindrical portion 18b which extends axially toward the annular bottom plate 16, and an innermost annular portion 18c which is parallel to the outermost annular portion 18a, which engages hermetically the end of the hollow cylindrical tab 16a of the bottom plate 16.

The outermost annular portion 18a has a planar front reference surface 18a' against which the engagement surface PI of the pallet P is adapted to abut.

An annular piston 19 is accommodated slidingly and hermetically in the pneumatic chamber 14. The annular piston 19 divides the pneumatic chamber 14 into a first region 14a opposite the annular bottom plate 16 and a second region 14b on the side of the annular bottom plate 16.

The annular piston 19 is provided with guiding means which engage slidingly locking means supported by the body 12 so that they can move between a retention position and a release position in relation to the pallet P.

In the embodiment described herein, the guiding means comprise three oblique guides 28 which converge away from the annular bottom plate 16, and the locking means comprise respective three locking inserts 32 which are received slidingly in respective guiding seats 36 provided in the wider cylindrical portion 12b of the body 12.

The guiding seats 36 extend radially in a direction at right angles to the axis of the annular piston 19.

The locking inserts 32 have respective oblique complementary guides 40 which engage slidingly the oblique guides 28 of the annular piston 19. The opening and closing of the locking inserts 32 is therefore determined by the axial movements of the annular piston 19, by sliding engagement between the oblique guides 28 and the oblique complementary guides 40.

The internal ends of the locking inserts 32 are shaped so as to engage by retention the centering pin C, in a per se known manner.

The annular piston 19 is actuated elastically in the closure direction of the locking inserts 32 by first elastic means which, in this embodiment, comprise a series of preloaded springs such as 44, 45 which are functionally interposed between the annular piston 19 and the body 12.

The annular piston 19 can be actuated in the opening direction of the locking inserts 32 by feeding pressurized air in the second region 14b of the pneumatic chamber 14.

For this purpose, in this embodiment, the annular flange 13 accommodates first valve means 50 which allow to connect selectively the first region 14a or the second region 14b of the cylindrical chamber 14 to an pressurized air source, for example, a gun compressor with manual actuation, respectively to increase the closing force of the locking inserts 32 or actuate their opening.

In a manner that is per se known from the preceding Italian patent application No. IT 102018000003257 in the name of this same Applicant, the first valve means 50 are configured to keep the locking inserts 32 permanently in a closed position (with increased clamping force) and in an open position even when the pressurized air source is disconnected.

In particular, the valve means 50 are provided with a first connector 56 and with a second connector 57 (Figure 1), to which the pressurized air source can be connected selectively, and are configured to:
- connect the first connector 56 to a first circuit (not shown) connected to the first region 14a of the cylindrical chamber 14, and the second connector 57 to a second circuit connected to the second region 14b of the cylindrical chamber 14, when the pressurized air source is connected to the first connector 56 and the second connector 57 is connected to the outlet,
- seal the first circuit when it is pressurized and the pressurized air source is disconnected from the first connector 56,
- connect the second circuit to the second connector 57 and the first circuit to the first connector 56, when the pressurized air source is connected to the second connector 57 and the first connector 56 is connected to the outlet,
- seal the second circuit when it is pressurized and the pressurized air source is disconnected from the second connector 57.

The first valve means 50 and their operation are described in detail in IT102018000003257 in the name of the Applicant and therefore their description thereof will be not discussed in depth in the present application.

According to the invention, the positioning device is provided with second valve means 60, which are arranged so as to control a venting circuit S which connects the second region 14b of the pneumatic chamber 14 to the atmosphere, and comprise a movable flow control element 62 which:
- is actuated by second elastic means 64 toward a position for closing the venting circuit S, and
- is functionally subjected to a presser 66 which protrudes from the front surface 18a' of the positioning device 10 and is adapted to be engaged by the engagement surface PI of the pallet P, when the latter is arranged in the positioning device 10, in order to push the flow control element 62 toward an open position of the venting circuit S in contrast with the second elastic means 64, so as to connect to the outlet the second region 14b of the pneumatic chamber 14, with consequent closure of the locking inserts 32 on the centering pin C of the pallet P as a result of the action applied by the preloaded springs 44, 45.

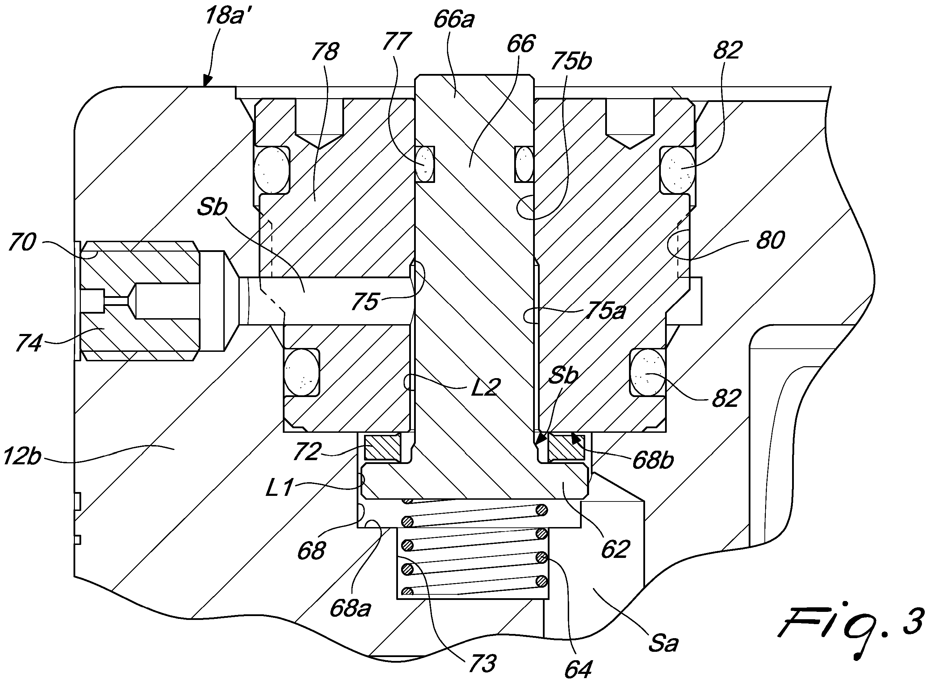

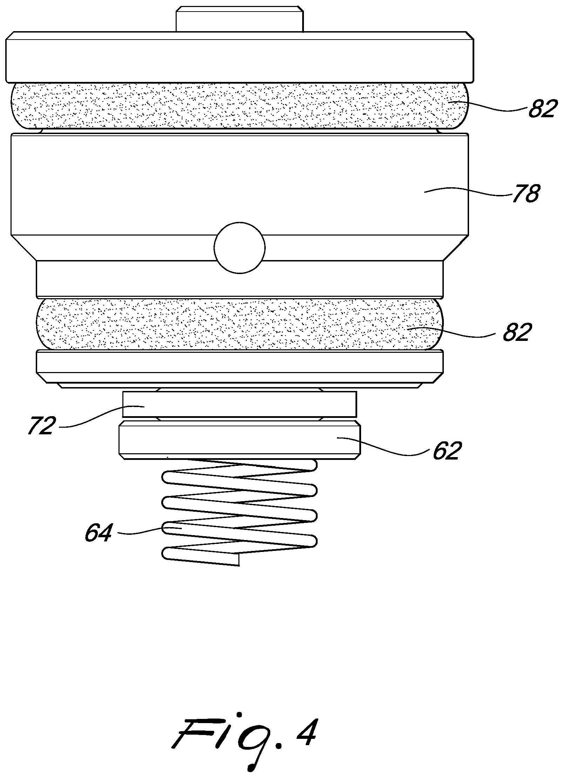

With particular reference to Figures 3 and 4, in the example described herein, the movable flow control element 62 has a disk-like profile and is accommodated slidingly within a cylindrical seat 68 arranged longitudinally. The cylindrical seat 68 is arranged between an upstream portion Sa of the venting circuit S, which, as shown in Figure 2, is in fluid communication with the second region 14b of the pneumatic chamber 14, and a downstream portion Sb of the venting circuit S, which is open to the atmosphere by means of a venting opening 70. The latter is advantageously formed on the side wall of the wider cylindrical portion 12b of the body 12.

The cylindrical seat 68 is delimited axially between an upstream annular wall 68a, which is subjected to the pressure of the upstream portion Sa of the venting circuit S, and a downstream annular wall 68b, which is subjected to the pressure of the downstream portion Sb of the venting circuit S.

The movable flow control element 62 is normally pushed by the second elastic means 64 into axial abutment against the downstream annular wall 68b with the interposition of an annular gasket 72. In this embodiment, the second elastic means 64 comprise advantageously a helical compression spring functionally interposed between the movable flow control element 62 and a housing 73 which is formed in the body 12 and is coaxial to the cylindrical seat 68.

A first annular port L1 is formed between the movable flow control element 62 and the side wall of the cylindrical seat 68.

Advantageously, the venting opening 70 accommodates a calibrated throttling grub 74.

In the embodiment described herein, the presser 66 has the shape of a stem which rises coaxially, and preferably integrally, from the flow control element 62 and protrudes with a free end 66a from the reference surface 18a' of the body 12.

In particular, the presser 66 crosses coaxially a channel 75 which has a first wider portion 75a and a second narrower portion 75b which leads onto the reference surface 18a' of the body 12. A second annular port L2 is formed between the presser 66 and the first portion 75a and is in fluid communication with the downstream portion Sb of the venting circuit S. The second portion 75b is instead engaged hermetically by the presser 66, which for this purpose is provided with a gasket 77.

Preferably, the downstream portion Sb of the venting circuit S and the channel 75, instead of being formed directly in the body 12 of the positioning device 10, are provided at least partially in a threaded valve body 78 which is screwed into a corresponding threaded hole 80 of the body 12, with the interposition of additional sealing gaskets 82, with the internal end of the valve body 78 defining the downstream annular wall 68b against which the movable flow control element 62 is pushed in abutment.

In operation, in a per se known manner, the pallet P is mounted on the positioning device 10 by inserting the centering pin C in the intermediate cylindrical portion 18b of the bottom wall 18, until the engagement surface PI of the pallet P abuts against the reference surface 18a'.

In a manner that is per se known from the previous Italian patent application No. IT102018000003257, by connecting the first connector 56 to a pressurized air source the second region 14b of the pneumatic chamber 14 is connected to the outlet and, at the same time, the first region 14a is pressurized. In this manner, the locking inserts 32 are locked on the centering pin C due both to the elastic force generated by the preloaded springs 44, 45 and to the pneumatic pressure present in the first region 14a of the pneumatic chamber.

The first valve means 50 are configured to stably maintain the pressure in the first region 14a of the cylindrical chamber 14 even when the pressurized air source is disconnected.

Regardless of the connection of the first connector 56 to the pressurized air source, when the engagement surface PI of the pallet P abuts against the reference surface 18a' it presses the presser 66, causing the separation of the movable flow control element 62 from the downstream annular face 68b of the cylindrical seat 68. In this manner, the upstream portion Sa of the venting circuit S is connected to the downstream portion Sb, with the second region 14b of the pneumatic chamber 14 which is connected to the outlet and consequent clamping of the positioning device 10 by the preloaded springs 44, 45.

Therefore, according to the intended aim and objects, even when the first connector 56 is not connected to the pressurized air source, for example due to human error or due to a malfunction, clamping by means of the preloaded springs 44, 45 is in any case ensured when the pallet P is arranged in the positioning device 10.

In order to reopen the locking inserts 32, compressed air is fed into the second connector 57 with the second region 14b of the cylindrical chamber 14 which is pressurized and the first region 14a that is connected to the outlet. In this case also, the first valve means 50 are configured to maintain stably the pressure in the second region 14b of the cylindrical chamber 14 even when the pressurized air source is disconnected.

The calibrated throttling grub 74 has the purpose of partially obstructing the outflow of the air when the second region 14b of the cylindrical chamber 14 is pressurized in order to actuate the locking means 32 toward the release position, so as to allow pressurization with consequent release of the part being worked and return of the movable flow control element 62 in abutment against the downstream annular face 68b of the cylindrical seat 68 so as to seal the venting circuit S again.

Some preferred embodiments of the invention have been described herein, but the person skilled in the art will naturally be able to make various modifications and variations within the scope of the claims.

In particular, the movable flow control element might be provided differently to what is described and illustrated. For example, a flow control element might be provided which performs a rotary movement instead of a linear one, and/or the presser might be a separate element which presses on the flow control element instead of being integral therewith.

Furthermore, the shape of the presser might be customized as a function of the specific pallet.

Furthermore, the safety system described here can be applied advantageously also to positioning devices which, unlike the illustrated example, need a continuous supply of pressurized air in order to maintain the open position.

Naturally, the technical features of the positioning device, such as the number of locking inserts, the shape of the body and of the pneumatic actuation means incorporated inside it, etcetera, may widely vary according to the invention, as defined by the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A positioning device (10) for machine tools and machining centers, comprising
- a body (12),
- pallet locking means (32) supported by said body (12) so that they can move between a retention position and a release position in relation to a pallet (P),
- first elastic means (44, 45) arranged so as to actuate said locking means (32) toward said retention position,
- pneumatic actuation means (14, 19) which can be supplied with pressurized air in order to actuate said pallet locking means (32) toward said release position in contrast with said first elastic means (44, 45),
**characterized in that** it comprises
- a venting circuit (S) arranged so as to discharge into the atmosphere, through a venting opening (70), the pressurized air fed to actuate said pallet locking means (32) toward said release position, and
- a movable flow control element (62), which is actuated by second elastic means (64) toward a position for closing said venting circuit (S) and is functionally subjected to a presser (66) which is adapted to be engaged by said pallet (P), when the latter is arranged in the positioning device (10), in order to push said flow control element (62) toward an open position of said venting circuit (S) in contrast with said second elastic means (64).

2. The positioning device (10) according to claim 1, **characterized in that** said venting opening (70) accommodates a calibrated throttling grub (74) which is adapted to partially obstruct the outflow of the pressurized air that is fed in order to actuate said pallet locking locking means (32) toward said release position, so as to allow the pressurization with consequent release of the part being worked and the return of said movable flow control element (62) to said position for closing the venting circuit (S).

3. The positioning device (10) according to claim 1 or 2, **characterized in that** said movable flow control element (62) has a disk-like profile and is accommodated slidingly within a cylindrical seat (68) which is arranged between an upstream portion (Sa) of said venting circuit (S), which communicates with said pneumatic actuation means (14), and a downstream portion (Sb) of the venting circuit (S), which is connected said venting opening (70).

4. The positioning device (10) according to claim 3, **characterized in that** said cylindrical seat (68) is delimited axially between an upstream annular wall (68a), which is subjected to the pressure of the upstream portion (Sa) of said venting circuit (S), and a downstream annular wall (68b), which is subjected to the pressure of the downstream portion (Sb) of said venting circuit (S), a first annular port (L1) being formed between said movable flow control element (62) and the side wall of said longitudinal cylindrical seat (68), said movable flow control element (62) being normally pushed by said elastic means (64) in axial abutment against said downstream annular wall (68b) by means of an annular gasket (72).

5. The positioning device (10) according to one of claims 3-4, **characterized in that** said presser (66) has the shape of a stem which rises coaxially from said flow control element (62) through a channel (75), and protrudes with one of its free ends (66a) from a reference surface (18a') of said body (12), on which said engagement surface (P1) of the pallet (P) is adapted to abut.

6. The positioning device (10) according to claim 5, **characterized in that** said channel (75) has a first wider portion (75a) and a second narrower portion (75b) which leads onto said reference surface (18a') of the body (12), a second annular port (L2) being formed between the presser (66) and said first portion (75a) and being in fluid communication with the downstream portion (Sb) of said venting circuit (S), said second portion (75b) being engaged hermetically by said presser (66).

7. The positioning device (10) according to one of claims 4-6, **characterized in that** said downstream portion (Sb) of the venting circuit (S) and said guiding channel (75) are provided at least partially in a threaded valve body (78) which is screwed into a corresponding threaded hole (80) of said body (12), the internal end of said valve body (78) defining the downstream annular wall (68b) against which said movable flow control element (62) is pushed in abutment.

8. The positioning device (10) according to one of claims 1-7, **characterized in that** it comprises valve means (50) provided with a first connector (56) and with a second connector (57) to which a pressurized air source can be connected selectively in order to actuate said pallet locking means (32) respectively toward said retention position and toward said release position, and are furthermore configured to keep said retention position and said release position stably even when said pressurized air source is disconnected.

## Patentansprüche

1. Eine Positioniervorrichtung (10) für Werkzeugmaschinen und Bearbeitungszentren, die Folgendes umfasst:
- einen Körper (12),
- Palettenblockiermittel (32), die so von dem Körper (12) getragen sind, dass sie sich zwischen einer Halteposition und einer Löseposition mit Bezug auf eine Palette (P) bewegen können,
- erste elastische Mittel (44, 45), angeordnet, um die Blockiermittel (32) zu der Halteposition hin zu bewegen,
- pneumatische Antriebsmittel (14, 19), die mit Druckluft versorgt werden können, um die Palettenblockiermittel (32) im Kontrast zu den ersten elastischen Mitteln (44, 45) zu der Löseposition hin zu bewegen;
**dadurch gekennzeichnet, dass** sie Folgendes umfasst:
- einen Belüftungskreis (S), angeordnet, um durch eine Belüftungsöffnung (70) die Druckluft, die eingeführt wurde, um die Palettenblockiermittel (32) zu der Löseposition hin zu bewegen, in die Atmosphäre abzulassen, und
- ein bewegliches Durchflussregelelement (62), das von zweiten elastischen Mitteln (64) in eine Position zum Schließen des Belüftungskreises (S) bewegt wird und funktionell einer Druckvorrichtung (66) ausgesetzt ist, welche ausgebildet ist, um in Eingriff mit der Palette (P) zu stehen, wenn Letztere sich in der Positioniervorrichtung (10) befindet, um das Durchflussregelelement (62) im Kontrast zu den zweiten elastischen Mitteln (64) in eine offene Position des Belüftungskreises (S) zu drücken.

2. Die Positioniervorrichtung (10) gemäß Anspruch 1, **dadurch gekennzeichnet, dass** die Belüftungsöffnung (70) eine kalibrierte Drosselschraube (74) enthält, die ausgebildet ist, um das Ausströmen der Druckluft, die eingeführt wird, um die Palettenblockiermittel (32) zu der Löseposition hin zu bewegen, teilweise zu blockieren, um die Druckbeaufschlagung mit anschließendem Lösen des bearbeiteten Teils und die Rückstellung des beweglichen Durchflussregelelements (62) in die Position zum Schließen des Belüftungskreises (S) zu gestatten.

3. Die Positioniervorrichtung (10) gemäß Anspruch 1 oder 2, **dadurch gekennzeichnet, dass** das bewegliche Durchflussregelelement (62) ein scheibenähnliches Profil hat und verschiebbar in einen zylindrischen Sitz (68) aufgenommen ist, welcher zwischen einem stromaufwärts gelegenen Abschnitt (Sa) des Belüftungskreises (S), der mit den pneumatischen Antriebsmitteln (14) kommuniziert, und einem stromabwärts gelegenen Abschnitt (Sb) des Belüftungskreises (S) angeordnet ist, welcher mit der Belüftungsöffnung (70) verbunden ist.

4. Die Positioniervorrichtung (10) gemäß Anspruch 3, **dadurch gekennzeichnet, dass** der zylindrische Sitz (68) axial zwischen einer stromaufwärts gelegenen Ringwand (68a), die dem Druck des stromaufwärts gelegenen Abschnitts (Sa) des Belüftungskreises (S) ausgesetzt ist, und einer stromabwärts gelegenen Ringwand (68b) eingegrenzt ist, die dem Druck des stromabwärts gelegenen Abschnitts (Sb) des Belüftungskreises (S) ausgesetzt ist; wobei eine erste Ringöffnung (L1) zwischen dem beweglichen Durchflussregelelement (62) und der Seitenwand des zylindrischen Längssitzes (68) geformt ist, wobei das bewegliche Durchflussregelelement (62) normalerweise von den elastischen Mitteln (64) über eine Ringdichtung (72) in axialem Anschlag gegen die stromabwärts gelegene Ringwand (68b) gedrückt wird.

5. Die Positioniervorrichtung (10) gemäß einem der Ansprüche 3-4, **dadurch gekennzeichnet, dass** die Pressvorrichtung (66) die Form eines Schafts hat, der durch einen Kanal (75) koaxial von dem Durchflussregelelement (62) ansteigt und mit einem seiner freien Enden (66a) von einer Referenzoberfläche (18a') des Körpers (12) vorsteht, an den die Eingriffsfläche (P1) der Palette (P) ausgebildet ist anzustoßen.

6. Die Positioniervorrichtung (10) gemäß Anspruch 5, **dadurch gekennzeichnet, dass** der Kanal (75) einen ersten breiteren Abschnitt (75a) und einen zweiten schmaleren Abschnitt (75b) hat, der zu der Referenzoberfläche (18a') des Körpers (12) führt, wobei eine zweite Ringöffnung (L2) zwischen der Pressvorrichtung (66) und dem ersten Abschnitt (75a) geformt ist und in Fluidaustausch mit dem stromabwärts gelegenen Abschnitt (Sb) des Belüftungskreises (S) steht, wobei der zweite Abschnitt (75b) in hermetischem Eingriff mit der Pressvorrichtung (66) steht.

7. Die Positioniervorrichtung (10) gemäß einem der Ansprüche 4-6, **dadurch gekennzeichnet, dass** der stromabwärts gelegene Abschnitt (Sb) des Belüftungskreises (S) und der Führungskanal (75) zumindest teilweise in einem mit einem Gewinde versehenen Ventilkörper (78) angebracht sind, der in ein entsprechendes Gewindeloch (80) des Körpers (12) eingeschraubt ist, wobei das innere Ende des Ventilkörpers (78) die stromabwärts gelegene Ringwand (68b) bestimmt, gegen welche das bewegliche Durchflussregelelement (62) bis zum Anschlag gedrückt wird.

8. Die Positioniervorrichtung (10) gemäß einem der Ansprüche 1-7, **dadurch gekennzeichnet, dass** sie Ventilmittel (50) umfasst, ausgestattet mit einem ersten Anschlusselement (56) und einem zweiten Anschlusselement (57), an die wahlweise eine Druckluftquelle angeschlossen werden kann, um die Palettenblockiermittel (32) in die Halteposition beziehungsweise in die Löseposition zu bewegen, und weiter konfiguriert, um die Halteposition und die Löseposition auch dann beizubehalten, wenn die Druckluftquelle nicht angeschlossen ist.

## Revendications

1. Dispositif de positionnement (10) pour des machines-outils et des centres d'usinage, comportant
- un corps (12),
- des moyens de blocage de palette (32) supportés par ledit corps (12) de sorte qu'ils peuvent se déplacer entre une position de retenue et une position de libération par rapport à une palette (P),
- des premiers moyens élastiques (44, 45) agencés de manière à actionner lesdits moyens de blocage (32) vers ladite position de retenue,
- des moyens d'actionnement pneumatique (14, 19) qui peuvent être alimentés en air mis sous pression afin d'actionner lesdits moyens de blocage de palette (32) vers ladite position de libération en opposition auxdits premiers moyens élastiques (44, 45), **caractérisé en ce qu'**il comporte
- un circuit d'évent (S) agencé de manière à décharger dans l'atmosphère, par une ouverture d'évent (70), l'air mis sous pression acheminé pour actionner lesdits moyens de blocage de palette (32) vers ladite position de libération, et
- un élément de commande d'écoulement mobile (62), qui est actionné par des seconds moyens élastiques (64) vers une position de fermeture dudit circuit d'évent (S) et est fonctionnellement soumis à un élément presseur (66) qui est adapté pour venir en prise avec ladite palette (P), lorsque cette dernière est agencée dans le dispositif de positionnement (10), afin de pousser ledit élément de commande d'écoulement (62) vers une position ouverte dudit circuit d'évent (S) en opposition auxdits seconds moyens élastiques (64).

2. Dispositif de positionnement (10) selon la revendication 1, **caractérisé en ce que** ladite ouverture d'évent (70) reçoit une vis sans tête d'étranglement calibrée (74) qui est adaptée pour entraver partiellement l'écoulement de sortie de l'air mis sous pression qui est acheminé afin d'actionner lesdits moyens de blocage de palette (32) vers ladite position de libération, de manière à permettre la mise sous pression avec une libération conséquente de la pièce en cours d'usinage et le retour dudit élément de commande d'écoulement mobile (62) à ladite position de fermeture du circuit d'évent (S).

3. Dispositif de positionnement (10) selon la revendication 1 ou 2, **caractérisé en ce que** ledit élément de commande d'écoulement mobile (62) a un profil analogue à un disque et est reçu de manière coulissante à l'intérieur d'un logement cylindrique (68) qui est agencé entre une partie amont (Sa) dudit circuit d'évent (S), qui communique avec lesdits moyens d'actionnement pneumatique (14), et une partie aval (Sb) du circuit d'évent (S), qui est reliée à ladite ouverture d'évent (70).

4. Dispositif de positionnement (10) selon la revendication 3, **caractérisé en ce que** ledit logement cylindrique (68) est délimité axialement entre une paroi annulaire amont (68a), qui est soumise à la pression de la partie amont (Sa) dudit circuit d'évent (S), et une paroi annulaire aval (68b), qui est soumise à la pression de la partie aval (Sb) dudit circuit d'évent (S), un premier orifice annulaire (L1) étant formé entre ledit élément de commande d'écoulement mobile (62) et la paroi latérale dudit logement cylindrique longitudinal (68), ledit élément de commande d'écoulement mobile (62) étant normalement poussé par lesdits moyens élastiques (64) en butée axiale contre ladite paroi annulaire aval (68b) au moyen d'un joint annulaire (72).

5. Dispositif de positionnement (10) selon l'une des revendications 3 à 4, **caractérisé en ce que** ledit élément presseur (66) a la forme d'une tige qui monte coaxialement à partir dudit élément de commande d'écoulement (62) à travers un canal (75), et fait saillie avec l'une de ses extrémités libres (66a) à partir d'une surface de référence (18a') dudit corps (12), sur laquelle ladite surface de prise (P1) de la palette (P) est adaptée pour venir en butée.

6. Dispositif de positionnement (10) selon la revendication 5, **caractérisé en ce que** ledit canal (75) a une première partie plus large (75a) et une seconde partie plus étroite (75b) qui donne sur ladite surface de référence (18a') du corps (12), un second orifice annulaire (L2) étant formé entre l'élément presseur (66) et ladite première partie (75a) et étant en communication fluidique avec la partie aval (Sb) dudit circuit d'évent (S), ladite seconde partie (75b) étant hermétiquement en contact avec ledit élément presseur (66).

7. Dispositif de positionnement (10) selon l'une des revendications 4 à 6, **caractérisé en ce que** ladite partie aval (Sb) du circuit d'évent (S) et ledit canal de guidage (75) sont agencés au moins partiellement dans un corps de soupape fileté (78) qui est vissé dans un trou fileté (80) correspondant dudit corps (12), l'extrémité interne dudit corps de soupape (78) définissant la paroi annulaire aval (68b) contre laquelle ledit élément de commande d'écoulement mobile (62) est poussé en butée.

8. Dispositif de positionnement (10) selon l'une des revendications 1 à 7, **caractérisé en ce qu'**il comporte des moyens de soupape (50) pourvus d'un premier raccord (56) et d'un second raccord (57) auxquels une source d'air mis sous pression peut être connectée sélectivement afin d'actionner lesdits moyens de blocage de palette (32) respectivement vers ladite position de retenue et vers ladite position de libération, et sont en outre configurés pour maintenir ladite position de retenue et ladite position de libération de manière stable même lorsque ladite source d'air mis sous pression est déconnectée.
